# EUROPEAN PATENT SPECIFICATION

(11) **EP 3 271 986 B1**
(45) Date of publication and mention of the grant of the patent: **08.05.2019**
(21) Application number: 16713332.1
(22) Date of filing: 17.03.2016
(51) Int. Cl.: H02H 1/00, H02H 7/125

(54) **SHORTING DEVICE FOR A RECTIFIER**
KURZSCHLUSSVORRICHTUNG FÜR EINEN GLEICHRICHTER
DISPOSITIF DE MISE EN COURT-CIRCUIT POUR UN REDRESSEUR

(30) Priority: 17.03.2015 EP 15159437
(43) Date of publication of application: 24.01.2018
(73) Proprietor: ABB Schweiz AG, 5400 Baden (CH)
(72) Inventor: STADLER, Raeto, 8135 Langnau a.A. (CH); EIGENMANN, Sandy, 8134 Adliswil (CH)
(74) Representative: ABB Patent Attorneys
(86) International application number: PCT/EP2016/055821
(87) International publication number: WO 2016/146754

(56) References cited:
- EP-A1- 0 621 678
- EP-A2- 0 388 850
- EP-A2- 2 512 023
- WO-A2-2013/083414
- DE-C1- 4 322 379
- FR-A1- 2 967 317
- GB-A- 2 510 871
- US-A- 5 886 861
- US-B1- 6 724 643

## Description

### FIELD OF THE INVENTION

The invention relates to the field of protection of high power rectifiers. In particular, the invention relates to a rectifier and a rectifier system comprising at least one of such rectifiers.

### BACKGROUND OF THE INVENTION

For special applications like aluminum electrolysis, chlorine electrolysis or electric arc furnaces, usually very high DC currents are necessary. Such high DC currents, which may be in the range from 40 kA to 120 kA, may be provided by power sources like high power rectifiers, which rectify an AC input current into a DC output current.

Like every high power circuitry, such rectifier may be subjected to arc faults. However, very high requirements exist to the mitigation of arc faults in such rectifiers.

Some existing methods, such as arc fault breakers, open-circuit the rectifier, upon detecting an arc fault, to disconnect the external circuit from the rectifier. However, this arrangement may not protect arc faults from occurring within the circuitry of the parallel rectifier, and not be fast enough to limit the damage.

In the case of high power rectifiers, conventional methods also may be too slow to prevent damage. It also may be too costly to build an outdoor container or housing to withstand an arc fault explosion within the container. Or it also may be not feasible to restrict access to the area in proximity of the rectifier to protect personal.

For example, in EP 1995871 A2, the semiconductors of the rectifier are used for mitigation arc faults by changing the firing pattern to introduce a short-circuit.

In CA 2656319 A1, upon detection of an arc fault, a DC output of a power source is short-circuited with a switching device to mitigate an arc fault.

WO 2013/083414 A2 relates to a method for eliminating an electric arc, wherein input phases in a rectifier are shorted internally without a separate shorting device. Anti-parallel semiconductor switches providing a shorting path are mentioned.

EP 0 388 850 A2 shows a short-circuiting switch based on thyristors for preventing over currents. The switch comprises antiparallel thyristors interconnecting two output phases of an inverter.

### DESCRIPTION OF THE INVENTION

It is an object of the invention to mitigate arc faults in a high power rectifier in an efficient and easy way.

This objective is achieved by the subject-matter of the independent claims. Further exemplary embodiments are evident from the dependent claims and the following description.

A first aspect of the invention relates to a rectifier for converting an AC current into a DC current, in particular a high current and/or high power rectifier adapted for processing currents of more than 5 kA, for example more than 50 kA. The rectifier may be an active rectifier, i.e. may be based on controlled semiconductor switches and/or may be used for providing currents to high current and/or high power loads, such as aluminum electrolysis devices, chlorine electrolysis devices or electric arc furnaces, but not limited to these. However, the rectifier also may be a passive rectifier comprising diodes.

According to an embodiment of the invention, the rectifier comprises at least two half-bridges comprising semiconductor switches, which half bridges are connected in parallel with respect to two output phases of a DC output of the rectifier, wherein each half-bridge is adapted for rectifying an input phase of an AC input of the rectifier, an arc detection device for detecting an electric arc fault of the rectifier and a shorting device for at least one of shorting the output phases and shorting the input phases, when actuated by the detection device. The shorting device comprises thyristors for conducting a shorting current. The thyristors delta-connect the input phases; and the thyristors of the shorting device, which interconnect the input phases, are connected in a ring to the input phases, in which ring the thyristors all have the same orientation.

Usually, the AC input of the rectifier comprises three input phases and the DC output of the rectifier comprises two output phases. In this case, three half-bridges are connected in parallel at the DC output.

The AC input may be connected to a transformer, which, for example, transforms the AC current from an electrical grid down to a rather small voltage (typically below 1700 V) but very high current (typically 50 to 120 kA) to be rectified by the rectifier, which may be supplied to a high current load as described above.

In general, a half-bridge comprises two branch, which interconnects the respective input phase with the two output phases. Each branch comprises semiconductor switches, which may be actively switchable, i.e. the rectifier may be an active or phase commutated rectifier.

The high power components of the rectifier (such as the half-bridges) may be arranged inside a container in which also a measurement device or sensing device for electric arcs may be arranged. For example, such a sensing device may be based on the optical detection of light emitted by the arc. The sensing device may be part of a controller that is adapted for detecting an arc fault based on the signal of the sensing device and that may trigger or actuate the shorting device, which is adapted to short-circuit the input phases with each other and/or to short-circuit the output phases with each other and/or to connect one of the two output phases to ground.

This shorting device is based on thyristors, which on the one hand may be switched in a very short time. In such a way, a short-circuiting of the phases may be put into effect less than 4 ms after the occurrence of the arc fault. Such a short time may prevent damages of the components of the rectifier and/or the enclosure.

On the other hand, thyristors may be adapted for conducting the shorting current long enough for extinguishing the electric arc. It has to be understood that the shorting device may be damaged while conducting the shorting current. After the arc fault, the shorting device or at least parts of the shorting device may be exchanged, which may be very cheap compared to a damaged rectifier. Thus the sensing device also may have to trigger the disconnection of the rectifier from the feeding source.

Summarized, a shorting device built of thyristors may be used for arc extinguishing and/or arc protection at the AC input and/or DC output of a (in particular high power and/or high current) rectifier.

In general, the shorting device may short-circuit the AC input and/or the DC output. This short-circuiting may be performed by firing one or more thyristors, which may be controlled by a gate unit of the shorting device. This gate unit may receive a signal to start short-circuiting the AC input and/or DC output from the arc sensing device or from a controller connected to the sensing device. Usually, the AC input may comprise three input phases. In this case, three phases has to be short-circuited with each other by the shorting device.

According to the invention, the thyristors, which interconnect the input phases, are delta connected, wherein the thyristors of the shorting device are connected in a ring to the input phases, in which ring the thyristors all have the same orientation. In other word, all delta connected thyristors interconnecting the input phases may be connected in series, such that a ring is formed, i.e. every thyristor is connected with a collector to an emitter of another thyristor (which is, however, connected with its collector not to the first thyristor). The thyristors all have the same orientation, when they all are in a blocking state with respect to a first direction around the ring and/or all are in a conducting state with respect to a second direction around the ring opposite to the first direction.

In such a way, a shorting current may flow between any of the two input phases, even when the direct current path between two input phases is blocked by one or more parallel connected thyristors, which interconnect the two input phases. The shorting current then may flow via the thyristors connected in series via the other input phase(s).

One current path may be provided by a thyristor interconnecting two input phases and an antiparallel current path between the two phases may be provided by two series connected thyristors that are connecting these two phases with the third phase. In such a way, thyristors may be saved. Only half of the thyristors may be used for providing the same current rating.

According to an embodiment of the invention, the shorting device only comprises parallel connected thyristors interconnecting two input phases. It may be that each of the two input phases are connected by at least two parallel thyristors.

According to an embodiment of the invention, the shorting device is further adapted for shortening the output phases, when actuated by the arc detection device, and the shorting device comprises at least one thyristor which interconnects at least two DC output phases.

According to an embodiment of the invention, the shorting device is further adapted for shortening the output phases, when actuated by the arc detection device, and the shorting device comprises at least one thyristor which interconnects at least one DC output phase with a grounding point.

According to an embodiment of the invention, the shorting device comprises parallel connected thyristors for distributing the shorting current. In any case, i.e. short-circuiting the output phases, grounding the output phases, short-circuiting the input phases in delta connection, more than one thyristor may be used for conducting the shorting current.

For example, in the case of antiparallel thyristors, which for example may interconnect the output phases, four thyristors, i.e. two pairs of antiparallel thyristors, may be used.

According to an embodiment of the invention, each branch of the half-bridges comprises semiconductor switches connected in parallel. In particular, in the case of a high power and/or current rectifier, the semiconductor switches for switching the current to be rectified may be connected in parallel to distribute this current among more than one semiconductor device.

According to an embodiment of the invention, the semiconductor switches of each branch of a half-bridge are connected in series with a fuse. Usually, every high power semiconductor switch of the rectifier may be protected with a fuse. In the case of a fault of the rectifier, this fuse may be sacrificed to protect the semiconductor switch. For example, each of the semiconductor switches of a half-bridge is connected in series with a separate fuse. In the case more than one semiconductor switch is connected in parallel for distributing the switching current, also fuses may be connected in parallel. These fuses may prevent to use a specific switching pattern to internally short-circuit the rectifier in the case of an arc fault.

According to an embodiment of the invention, the semiconductor switches of the half-bridges are thyristors or diodes. The shorting device and the rectifier may comprise the same type of semiconductor devices.

A further aspect of the invention relates to a rectifier system which comprises at least one or more rectifiers as described in the above and in the following. These rectifiers may be connected in parallel with respect to their DC outputs. The AC input may be connected to one or more AC sources. High power and/or high current rectifiers may be switched in parallel. In this case and in particular, when the load process has electric capacity, it may be beneficial to provide a shorting device for the AC side and the DC side.

These and other aspects of the invention will be apparent from and elucidated with reference to the embodiments described hereinafter.

### BRIEF DESCRIPTION OF THE DRAWINGS

The subject-matter of the invention will be explained in more detail in the following text with reference to exemplary embodiments which are illustrated in the attached drawings.
Fig. 1 schematically shows a circuit diagram for a rectifier system according to an embodiment of the invention.
Fig. 2 schematically shows a circuit diagram for a branch of a rectifier of the system of Fig. 1.
Fig. 3 schematically shows a circuit diagram for a DC output shorting device for the system of Fig. 1.
Fig. 4 schematically shows a circuit diagram for an AC input shorting device.
Fig. 5 schematically shows a circuit diagram for an AC input shorting device according to an embodiment of the invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

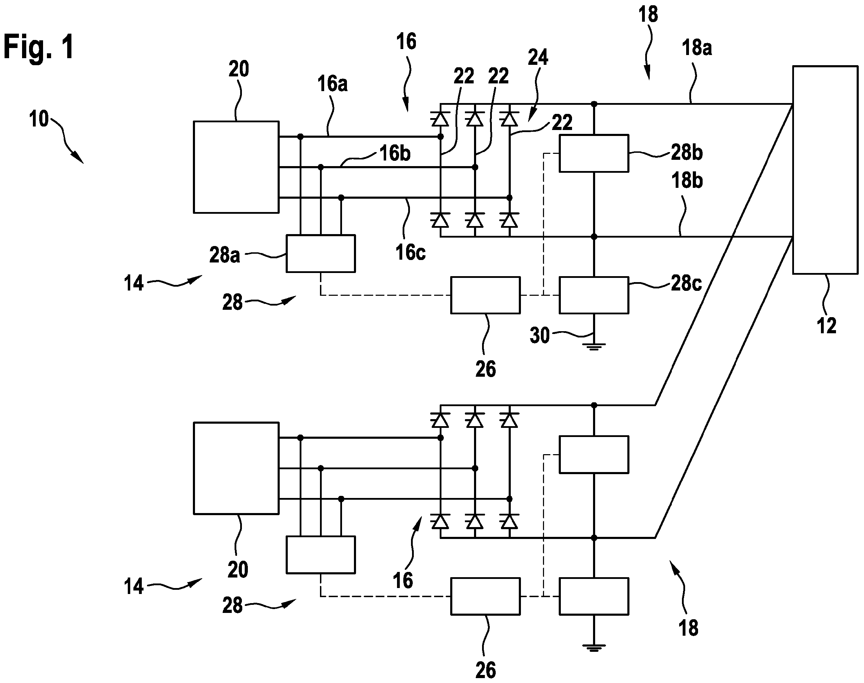

Fig. 1 shows a rectifier system 10 for supplying a load 12 with a high power DC current. For example, the load may be an aluminum electrolysis device, a chlorine electrolysis device or an electric arc furnace.

The rectifier system 10 may comprise one or more rectifiers 14, which may be identically designed. Each rectifier 14 comprises an AC input 16 with at least two normally three input phases 16a, 16b, 16c and a DC output 18 with two output phases 18a, 18b. The DC outputs of the rectifiers 14 are connected in parallel to the load 12. The AC input 16 of each rectifier 14 is connected to an AC power source 20, which, for example, may comprise a transformer connected to an electrical grid.

Each rectifier 14 comprises at least two half-bridges 22, which are connected in parallel with the DC output 18 and are interconnecting the input phases 16a, 16b, 16c with the output phases 18a, 18b. Each half-bridge comprises two branches 24, which comprise semiconductor switches that in Fig. 1 are symbolized with a single semiconductor. The semiconductor switches of the rectifier may be switched by a controller, which, for example, may control the voltage and/or the current supplied to the load 12. Each rectifier 14 may comprise a separate controller.

High power components of each rectifiers 14 such as the half-bridges 22 or, for example, bus bars etc. may be arranged inside a housing or a container, in which also an arc detection device 26 (or at least its sensing device such as an optical sensor) is arranged.

Each rectifier 14 also comprises a shorting device 28, which comprises an input shorting device 28a, an output shorting device 28b and an output grounding device 28c. It has to be noted that alternatively the rectifier 14 only may comprise the input shorting device 28a (optionally in combination with the output grounding device 28c).

In the case of an arc fault, the detection device 26 may send an arc fault signal to the shorting device 28, which may short-circuit the input phases 16a, 16b, 16c and/or the output phases 18a, 18b. Additionally, the shorting device 28 may ground the output phases 18a, 18b, when receiving this signal, with a grounding point 30.

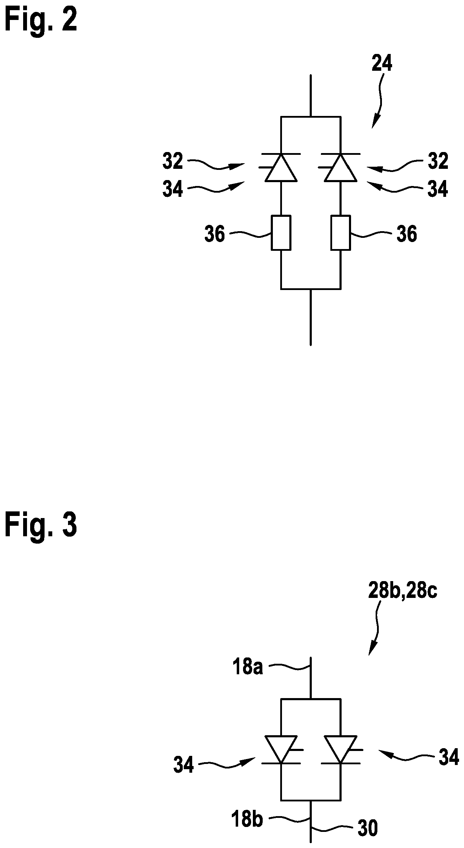

Fig. 2 shows a branch 24 of a half-bridge 22 of the rectifier. The branch 24 comprises semiconductor switches 32, which may be thyristors 34 and/or which may be connected in parallel for distributing the current to be switched among these semiconductor switches 32. It has to be understood that contrary to Fig. 2, not only two but a plurality of semiconductor switches 32 may be connected in parallel such that high current may be switched.

Every semiconductor switch 32 of the branch 24 may be protected by an individual fuse 36, which is connected in series with the semiconductor switch 32. It also may be possible that all semiconductor switches 32 of the branch 24 are protected by one fuse 36, which is connected in series with all semiconductor switches 32.

The semiconductor switches 32 of the rectifier 14 may be switched that the multi-phase AC input current at the AC input 16 is rectified to a DC current at the DC output 18. This switching may be controlled by a controller of the rectifier 14, which provides the respective gate signals based on measurements inside the rectifier 14. Due to the fuses 36 it may be impossible to short-circuit the rectifier 14 with the internal semiconductor switches 32 to extinguish arcs inside the rectifier 14. In case that the semiconductor switches 32 of the rectifier 14 are diodes no options exist to generate a short circuit inside the rectifier 14 to extinguish arcs inside the rectifier 14.

Fig. 3 shows an embodiment of an output shorting device 28b or an output grounding device 28c. The device 28b, 28c may comprise at least one thyristor 34. In case the shorting and/or grounding current is too high, multiple thyristors 34 may be connected in parallel. In general in Fig.3 and the following figures, the thyristors 34 may be replaced with switchable semiconductors, which may be line or force commutated.

The parallel connected thyristors 34 in Fig. 3 and the following figures may be used for distributing a shorting current among parallel thyristors 34.

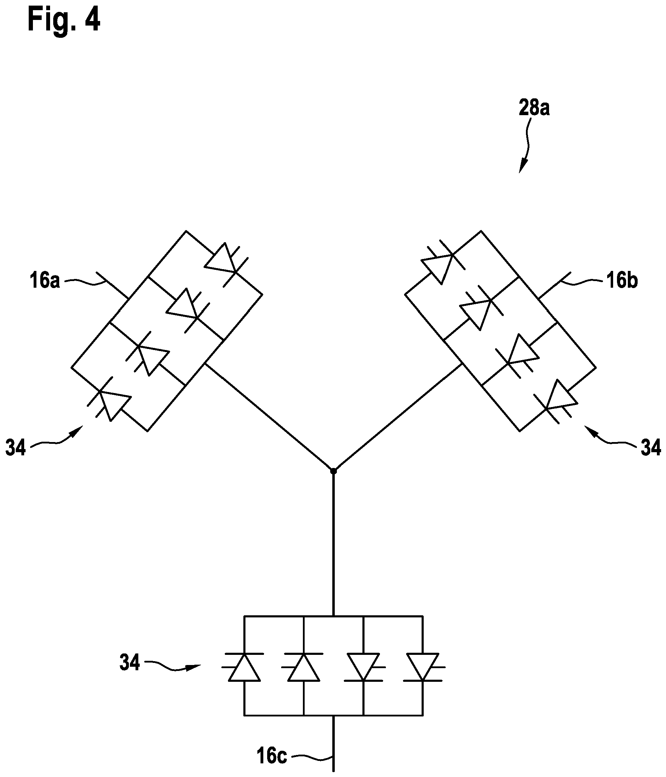

Fig. 4 shows an example of an input shorting device 28a, not being part of the invention, in which three sets of antiparallel thyristors 34 are star-connecting the input phases 16a, 16b, 16c. Every set of thyristors 34 may comprise one or multiple parallel connected thyristors.

In general, a thyristor 34 has a very high resistance in a blocking state and usually is working as a diode in a conducting state, i.e. it has a comparable low resistance in its conducting direction and a very high resistance in the reverse direction. Thus, it may be necessary to fire two antiparallel thyristors 34 to establish a conducting short-circuit path in both directions, in the case of a star-connection.

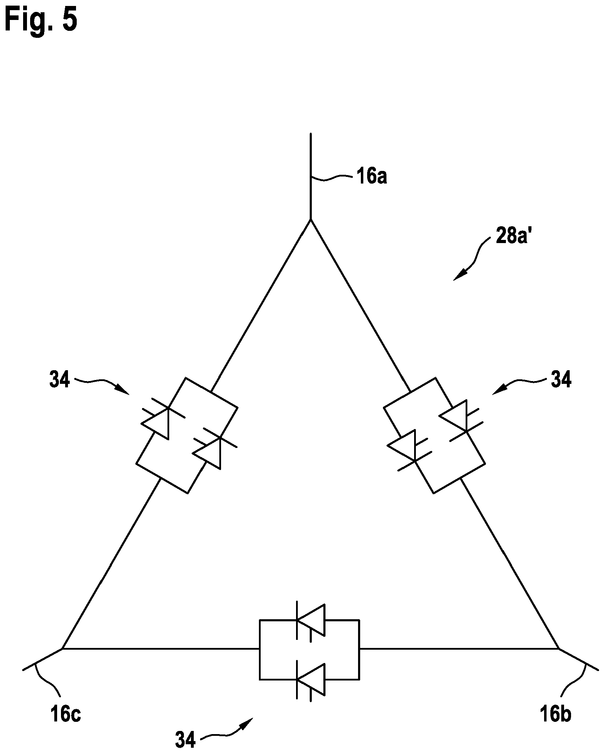

Fig. 5 shows an embodiment of a shorting device 28a', in which three sets of thyristors 34 are delta-connecting the input phases 16a, 16b, 16c. Each set of thyristors may comprise one or more thyristor connected in parallel. However, it is also possible, that only one thyristor is interconnecting two input phases 16a, 16b, 16c.

As shown in Fig. 5, the thyristors 34 are interconnected into a ring, i.e. each thyristor 34 is connected with an emitter to a collector of another thyristor 34 (which, however is not directly connected with its emitter to the collector of the first thyristor 34). In such a way, when the thyristors 34 are all switched into the conducting state, a first current path may form via a thyristor 34 between a first input phase (such as 16a) and a second input phase (such as 16b). An antiparallel, second current path may form between the first input phase (such as 16a) and the second input phase (such as 16b) via the third input phase (such as 16c) via one or more thyristors 34 interconnecting the second input phase with the third input phase and via one or more thyristors 34 interconnecting the third input phase with the first input phase.

It has to be understood that not only two but a plurality of thyristors 34 may be connected in parallel in Fig. 3 to Fig. 5 such that high current may be switched. However, it also may be possible that in Fig. 3 to Fig. 5 only one thyristor 34 is used for switching a current in one direction, i.e. one antiparallel pair of thyristors 34 in Fig. 4 and only one thyristor between two input phases 16a, 16b, 16c in Fig. 3 and 5.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practicing the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: rectifier system
- 12: load
- 14: rectifier
- 16: AC input
- 16a, 16b, 16c: input phase
- 18: DC output
- 18a, 18b: output phase
- 20: AC source
- 22: half-bridge
- 24: branch
- 26: arc detection device
- 28: shorting device
- 28a, 28a': input shorting device
- 28b: output shorting device
- 28c: output grounding device
- 30: grounding point
- 32: semiconductor switch
- 34: thyristor
- 36: fuse

## Claims

1. A rectifier (14) for converting an AC current into a DC current, the rectifier (14) comprising:
at least two half-bridges (22) comprising semiconductor switches (32), which are connected in parallel with respect to two output phases (18a, 18b) of a DC output (18) of the rectifier (14), wherein each half-bridge (22) is adapted for rectifying an input phase (16a, 16b, 16c) of an AC input (16) of the rectifier (14);
an arc detection device (26) for detecting an electric arc fault of the rectifier (14);
a shorting device (28) for shorting the input phases (16a, 16b, 16c), when actuated by the arc detection device (26);
wherein the shorting device (28) comprises thyristors (34) for conducting a shorting current,
**characterized in**
**that** the thyristors (34) delta-connect the input phases (16a, 16b, 16c); and
**that** the thyristors (34) of the shorting device (28), which interconnect the input phases (16a, 16b, 16c), are connected in a ring to the input phases (16a, 16b, 16c), in which ring the thyristors (34) all have the same orientation.

2. The rectifier of claim 1,
wherein the shorting device (28a') only comprises parallel connected thyristors (34) interconnecting two input phases (16a, 16b, 16c).

3. The rectifier (14) according to claim 1 or 2,
wherein the shorting device (28b) is adapted for shorting the output phases (18a, 18b), when actuated by the arc detection device (26) and the shorting device (28b) comprises at least one thyristor (34) which interconnects the two output phases (18a, 18b).

4. The rectifier (14) according to one of the preceding claims,
wherein the shorting device (28c) is adapted for shorting the output phases (18a, 18b), when actuated by the arc detection device (26) and the shorting device (28b) comprises at least one thyristor (34) which interconnects at least one output phase (18a, 18b) with a grounding point (30).

5. The rectifier (14) according to one of the preceding claims,
wherein the shorting device (28) comprises parallel connected thyristors (34) for distributing the shorting current.

6. The rectifier (14) according to one of the preceding claims,
wherein each branch (24) of the half-bridges (22) comprises semiconductor switches (32) connected in parallel.

7. The rectifier (14) according to one of the preceding claims,
wherein the semiconductor switches (32) of each branch of a half-bridge (22) are connected in series with a fuse (36).

8. The rectifier (14) according to one of the preceding claims,
wherein each of the semiconductor switches of a half-bridge (22) is connected in series with a separate fuse (36).

9. The rectifier (14) according to one of the preceding claims,
wherein the semiconductor switches (32) of the half-bridges comprises thyristors (34) and/or diodes.

10. The rectifier (14) according to one of the preceding claims,
wherein the rectifier (14) is a high current rectifier adapted for processing currents of more than 5 kA.

11. A rectifier system (10) comprising at least two rectifiers (14) according to one of the preceding claims, which are connected in parallel with respect to their DC outputs (18).

## Patentansprüche

1. Gleichrichter (14) zum Wandeln eines Wechselstroms in einen Gleichstrom, wobei der Gleichrichter (14) umfasst:
mindestens zwei Halbbrücken (22), die Halbleiterschalter (32) umfassen, die in Bezug auf zwei Ausgangsphasen (18a, 18b) eines Gleichstromausgangs (18) des Gleichrichters (14) parallel geschaltet sind, wobei jede Halbbrücke (22) geeignet ist, um eine Eingangsphase (16a, 16b, 16c) eines Wechselstromeingangs (16) des Gleichrichters (14) gleichzurichten;
eine Lichtbogenerkennungsvorrichtung (26) zum Erkennen eines elektrischen Lichtbogenfehlers des Gleichrichters (14);
eine Kurzschlussvorrichtung (28) zum Kurzschließen der Eingangsphasen (16a, 16b, 16c), wenn diese von der Lichtbogenerkennungsvorrichtung (26) aktiviert werden;
wobei die Kurzschlussvorrichtung (28) Thyristoren (34) umfasst, um einen Kurzschlussstrom zu leiten, **dadurch gekennzeichnet,**
**dass** die Thyristoren (34) die Eingangsphasen (16a, 16b, 16c) in einer Dreiecksschaltung verbinden; und
**dass** die Thyristoren (34) der Kurzschlussvorrichtung (28), welche die Eingangsphasen (16a, 16b, 16c) miteinander verbinden, in einem Ring mit den Eingangsphasen (16a, 16b, 16c) verbunden sind, wobei die Thyristoren (34) in dem Ring alle die gleiche Ausrichtung aufweisen.

2. Gleichrichter nach Anspruch 1,
wobei die Kurzschlussvorrichtung (28a') nur parallel geschaltete Thyristoren (34) umfasst, die zwei Eingangsphasen (16a, 16b, 16c) miteinander verbinden.

3. Gleichrichter (14) nach Anspruch 1 oder 2,
wobei die Kurzschlussvorrichtung (28b) geeignet ist, um die Ausgangsphasen (18a, 18b) kurzzuschließen, wenn diese von der Lichtbogenerkennungsvorrichtung (26) aktiviert werden; und wobei die Kurzschlussvorrichtung (28b) mindestens einen Thyristor (34) umfasst, der die beiden Ausgangsphasen (18a, 18b) miteinander verbindet.

4. Gleichrichter (14) nach einem der vorhergehenden Ansprüche,
wobei die Kurzschlussvorrichtung (28c) geeignet ist, um die Ausgangsphasen (18a, 18b) kurzzuschließen, wenn diese von der Lichtbogenerkennungsvorrichtung (26) aktiviert werden; wobei die Kurzschlussvorrichtung (28b) mindestens einen Thyristor (34) umfasst, der mindestens eine Ausgangsphase (18a, 18b) mit einem Erdungspunkt (30) verbindet.

5. Gleichrichter (14) nach einem der vorhergehenden Ansprüche,
wobei die Kurzschlussvorrichtung (28) parallel geschaltete Thyristoren (34) umfasst, um den Kurzschlussstrom zu verteilen.

6. Gleichrichter (14) nach einem der vorhergehenden Ansprüche,
wobei jeder Zweig (24) der Halbbrücken (22) Halbleiterschalter (32) umfasst, die parallel geschaltet sind.

7. Gleichrichter (14) nach einem der vorhergehenden Ansprüche,
wobei die Halbleiterschalter (32) von jedem Zweig einer Halbbrücke (22) mit einer Sicherung (36) in Reihe geschaltet sind.

8. Gleichrichter (14) nach einem der vorhergehenden Ansprüche,
wobei jeder der Halbleiterschalter einer Halbbrücke (22) mit einer separaten Sicherung (36) in Reihe geschaltet ist.

9. Gleichrichter (14) nach einem der vorhergehenden Ansprüche,
wobei die Halbleiterschalter (32) der Halbbrücken Thyristoren (34) und/oder Dioden umfassen.

10. Gleichrichter (14) nach einem der vorhergehenden Ansprüche,
wobei der Gleichrichter (14) ein Hochstromgleichrichter ist, der geeignet ist, um Ströme von mehr als 5 kA zu verarbeiten.

11. Gleichrichtersystem (10), das mindestens zwei Gleichrichter (14) nach einem der vorhergehenden Ansprüche umfasst, die in Bezug auf ihre Gleichstromausgänge (18) parallel geschaltet sind.

## Revendications

1. Redresseur (14) permettant de convertir un courant alternatif en un courant continu, le redresseur comprenant :
au moins deux demi-ponts (22) comprenant des commutateurs à semi-conducteurs (32), qui sont branchés parallèlement à deux phase de sortie (18a, 18b) d'une sortie continue (18) du redresseur (14), chaque demi-pont (22) étant conçu pour redresser une phase d'entrée (16a, 16b, 16c) et une entrée alternative (16) du redresseur (14) ;
un dispositif de détection d'arc (26) permettant de détecter un défaut du type arc électrique du redresseur (14) ;
un dispositif de court-circuitage (28) permettant de court-circuiter les phases d'entrée (16a, 16b, 16c), lorsqu'il est actionné par le dispositif de détection d'arc (26) ;
dans lequel le dispositif de court-circuitage (28) comprend des thyristors (34) permettant de conduire un courant de court-circuit,
**caractérisé en ce que**
les thyristors (34) relient en triangle les phases d'entrée (16a, 16b, 16c) ; et
les thyristors (34) du dispositif de court-circuitage (28), qui interconnectent les phases d'entrée (16a, 16b, 16c), sont reliés aux phases d'entrée (16a, 16b, 16c) en formant un anneau, dans lequel anneau les thyristors (34) ont chacun la même orientation.

2. Redresseur selon la revendication 1,
dans lequel le dispositif de court-circuitage (28a') ne contient que des thyristors branchés en parallèle (34) qui interconnectent deux phases d'entrée (16a, 16b, 16c).

3. Redresseur (14) selon la revendication 1 ou 2,
dans lequel le dispositif de court-circuitage (28b) est conçu pour court-circuiter les phases de sortie (18a, 18b) lorsqu'il est actionné par le dispositif de détection d'arc (26), et le dispositif de court circuitage (28b) comprend au moins un thyristor (34) qui interconnecte les deux phases de sortie (18a, 18b).

4. Redresseur (14) selon l'une des revendications précédentes,
dans lequel le dispositif de court-circuitage (28c) est conçu pour court-circuiter les phases de sortie (18a, 18b) lorsqu'il est actionné par le dispositif de détection d'arc (26), et le dispositif de court circuitage (28b) comprend au moins un thyristor (34) qui interconnecte au moins une phase de sortie (18a, 18b) avec un point de mise à la masse (30).

5. Redresseur (14) selon l'une des revendications précédentes,
dans lequel le dispositif de court-circuitage (28) contient des thyristors branchés en parallèle (34) servant à répartir le courant de court-circuit.

6. Redresseur (14) selon l'une des revendications précédentes,
dans lequel chaque branche (24) des demi-ponts (22) comprend des commutateurs à semi-conducteurs (32) branchés en parallèle.

7. Redresseur (14) selon l'une des revendications précédentes,
dans lequel les commutateurs à semi-conducteurs (32) de chaque branche d'un demi-pont (22) sont branchés en série avec un fusible (36).

8. Redresseur (14) selon l'une des revendications précédentes,
dans lequel chacun des commutateurs à semi-conducteurs d'un demi-pont (22) est branché en série avec un fusible distinct (36).

9. Redresseur (14) selon l'une des revendications précédentes,
dans lequel les commutateurs à semi-conducteurs (32) des demi-ponts comprennent des thyristors (34) et/ou des diodes.

10. Redresseur (14) selon l'une des revendications précédentes,
dans lequel le redresseur (14) est un redresseur à courant élevé conçu pour traiter des courants supérieurs à 5 kA.

11. Système redresseur (10) comprenant au moins deux redresseurs (14) selon l'une des revendications précédentes, qui sont branchés parallèlement à leur sortie continue (18).
